# EUROPEAN PATENT APPLICATION

(11) **EP 3 936 772 A1**
(43) Date of publication of application: **12.01.2022**
(21) Application number: 19918206.4
(22) Date of filing: 05.03.2019
(51) Int. Cl.: F24F 3/147, B01D 53/26, F24F 1/0358, F24F 3/14

(54) **AIR TREATMENT DEVICE**

(71) Applicant: MITSUBISHI ELECTRIC CORPORATION, Chiyoda-ku Tokyo 100-8310 (JP)
(72) Inventor: HORIE, Hayato, Tokyo 100-8310 (JP); HAMADA, Mamoru, Tokyo 100-8310 (JP)
(74) Representative: Studio Torta S.p.A.
(86) International application number: PCT/JP2019/008676
(87) International publication number: WO 2020/178988

(57) **Abstract**

An air treatment apparatus (500) includes: a total heat exchanger (40); a heat supply device (12) having a heater (10) and a cooler (11); an upper damper (20); and a complex dehumidification device (32) having a first stationary desiccant (30) and a second stationary desiccant (31). The upper damper (20) allows return air (RA) to flow into one of the first stationary desiccant (30) and the second stationary desiccant (31), and allows outdoor air (OA) to flow into the other one of the first stationary desiccant (30) and the second stationary desiccant (31). The upper damper (20) switches between a return air path (810) and an outdoor air path (811) so that the return air (RA) and the outdoor air (OA) pass through different ones of the first stationary desiccant (30) and the second stationary desiccant (31).

## Description

### Technical Field

The present invention relates to an air treatment apparatus provided with a stationary desiccant and a total heat exchanger.

### Background Art

A ventilation device that uses a desiccant for the purpose of indoor dehumidification is known. In this ventilation device, a sheet coated with the desiccant is formed into a rotor. The rotor is rotated to dehumidify outdoor air and to regenerate the desiccant. There are factors that reduce energy efficiency, such as the need for a motor to rotate the rotor and potential air leakage between a regeneration unit and a dehumidification unit.

In view of this, a system has been proposed in which a sheet coated with a desiccant material is molded into a block to switch an air path, thereby dehumidifying outdoor air and regenerating the desiccant material (for example, Non-Patent Literature 1). According to this system, a motor that poses an issue when using a rotor becomes unnecessary, and air leakage can be reduced.

### Citation List

### Non-Patent Literature

Non-Patent Literature 1: Material Attached to Press Release, "Regarding Start of Sorption Type Humidity Control System Development Project", November 27, 2009, Okayama University, [Retrieved on February 12, 2019] Internet, (https://www.okayama-u.ac.jp/up_load_files/soumu-pdf/press-091127-9-2.pdf)

### Summary of Invention

### Technical Problem

The sorption type humidity control system disclosed in Non-Patent Literature 1 employs a stationary desiccant but does not employ a total heat exchanger. Therefore, this system does not necessarily have high energy efficiency.

An objective of the present invention is to provide an energy-efficient air treatment apparatus by combining an outdoor air treatment machine in which a stationary dehumidification device is installed, with a total heat exchanger.

### Solution to Problem

An air treatment apparatus of the present invention includes:
a total heat exchanger,
a heat supply device including a first heat exchanger and a second heat exchanger,
a damper, and
a complex dehumidification device including a first stationary dehumidification device and a second stationary dehumidification device;
the total heat exchanger, the heat supply device, the damper and the complex dehumidification device being arranged sequentially from the total heat exchanger followed by the heat supply device, the damper and then the complex dehumidification device;
the total heat exchanger, the first heat exchanger, the damper and the complex dehumidification device being arranged in a return air path sequentially starting with the total heat exchanger, from upstream to downstream of the return air path where return air flows;
the total heat exchanger, the second heat exchanger, the damper and the complex dehumidification device being arranged in an outdoor air path sequentially starting with the total heat exchanger, from upstream to downstream of the outdoor air path where outdoor air flows; and
the damper:
   allowing the return air to flow into one of the first stationary dehumidification device and the second stationary dehumidification device, and allowing the outdoor air to flow into the other one of the first stationary dehumidification device and the second stationary dehumidification device; and
   switching between the return air path and the outdoor air path so that the return air and the outdoor air pass through different ones of the first stationary dehumidification device and the second stationary dehumidification device.

### Advantageous Effects of Invention

An air treatment apparatus of the present invention is provided with a total heat exchanger and a stationary dehumidification device. A damper switches between a return air flow path and an outdoor air flow path so that return air and outdoor air pass through different stationary dehumidification devices. As a result, it is possible to provide an efficient air treatment apparatus.

### Brief Description of Drawings

Fig. 1 is a diagram of Embodiment 1 presenting a schematic perspective view of an air treatment apparatus showing its interior.
Fig. 2 is a diagram of Embodiment 1 presenting a schematic side view of the air treatment apparatus seen through a left-side surface.
Fig. 3 is a diagram of Embodiment 1 presenting a schematic plan view of the air treatment apparatus seen through an upper surface. A side view of an outdoor air treatment system.
Fig. 4 is a diagram of Embodiment 1 presenting a schematic bottom view of the air treatment apparatus seen through a bottom surface.
Fig. 5 is a diagram of Embodiment 1 illustrating a hardware configuration of a control device.
Fig. 6 is a diagram of Embodiment 1 illustrating a state where a plurality of sub-dampers are open in opposite directions to those in Fig. 1. A front view of the outdoor air treatment system.
Fig. 7 is a diagram of Embodiment 1 presenting a schematic front view of the air treatment apparatus.
Fig. 8 is a diagram of Embodiment 1 presenting a schematic rear view of the air treatment apparatus.
Fig. 9 is diagram of Embodiment 1 presenting a schematic side view of the air treatment apparatus in which a bypass channel is formed.
Fig. 10 is a diagram of Embodiment 1 illustrating a state where a bypass channel partition plate is opened and a bypass channel is formed.
Fig. 11 is a diagram of Embodiment 1 illustrating a bypass determination table.
Fig. 12 is a diagram of Embodiment 1 presenting an air diagram of outdoor air.
Fig. 13 is a diagram of Embodiment 1 illustrating a configuration in which a heater and a cooler are arranged on the left and right.
Fig. 14 is a diagram of Embodiment 1 illustrating Modification 2.
Fig. 15 is a diagram of Embodiment 1 illustrating Modification 3.
Fig. 16 is a diagram of Embodiment 1 illustrating a hardware configuration of a modification of the control device.

### Description of Embodiments

An embodiment of an air treatment apparatus according to the present embodiment will be described with referring to drawings. Note that the present invention is not limited by the embodiment to be described below.

If drawings have XYZ coordinates, the XYZ coordinates are the same between the drawings. In the drawings, return air is expressed as RA, outdoor air is expressed as OA, exhaust air is expressed as EA, and supply air is expressed as SA.

### Embodiment 1.

An air treatment apparatus 500 will be described below with referring to the drawings. The air treatment apparatus 500 has three major features as follows.
(1) The air treatment apparatus 500 has a configuration in which a stationary desiccant and a total heat exchanger are combined.
   By combining the stationary desiccant and the total heat exchanger, a high-efficiency ventilation apparatus can be provided.
(2) The air treatment apparatus 500 switches between a stationary desiccant through which return air passes and a stationary desiccant through which outdoor air passes. The air treatment apparatus 500 switches between the stationary desiccants to allow the return air to flow into a first stationary desiccant 30 and the outdoor air to flow into a second stationary desiccant 31, and then to allow the return air to flow into the second stationary desiccant 31 and the outdoor air to flow into the first stationary desiccant 30. This switching is repeated, thereby reproducing the stationary desiccants efficiently.
(3) The air treatment apparatus 500 forms a bypass channel by which the return air bypasses a total heat exchanger 40 on the basis of temperature and humidity of the return air and temperature and humidity of the outdoor air. By bypassing the return air flowing into the total heat exchanger 40, a high-efficiency air treatment apparatus 500 can be provided.

### ^{∗∗∗} Description of Configurations ^{∗∗∗}

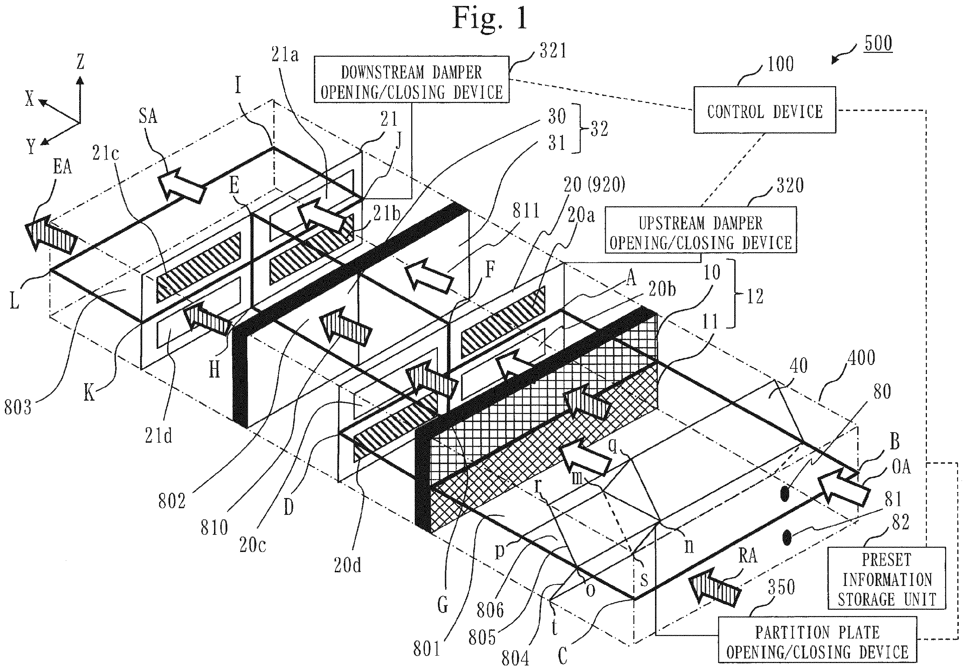

Fig. 1 is a perspective view of the air treatment apparatus 500.

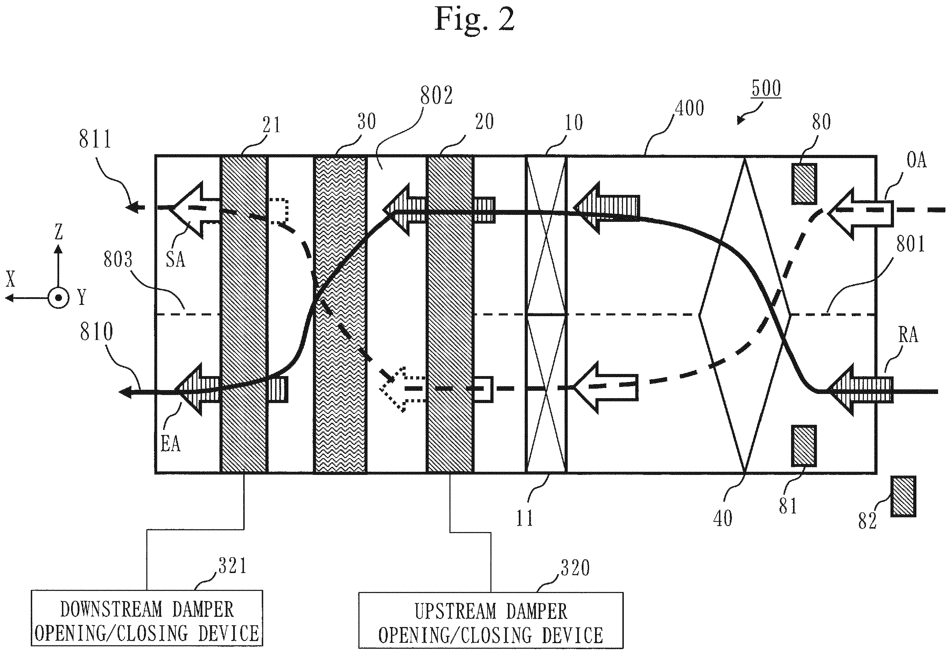

Fig. 2 schematically illustrates the air treatment apparatus 500 seen through a left-side surface.

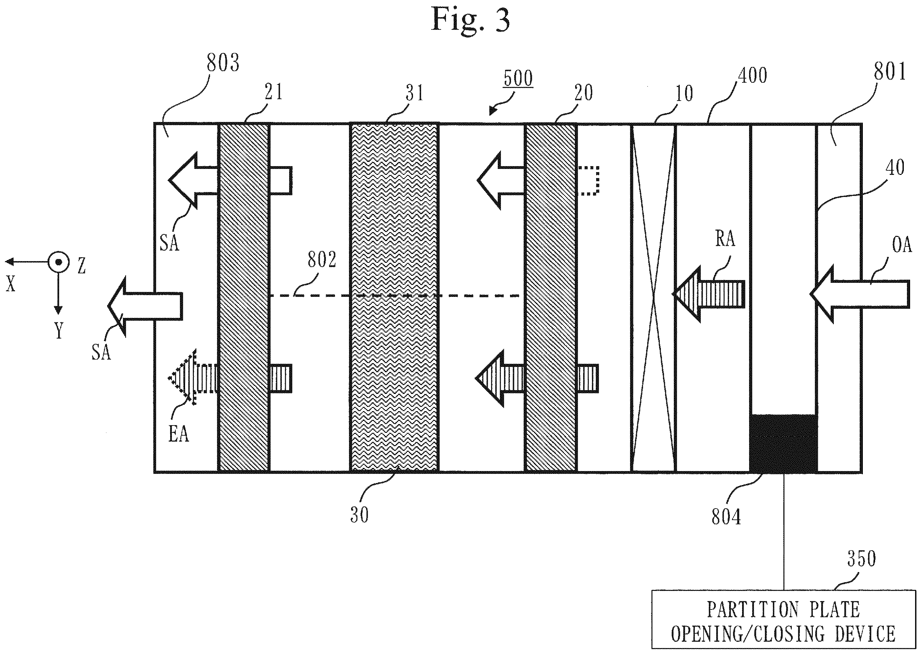

Fig. 3 schematically illustrates the air treatment apparatus 500 seen through an upper surface.

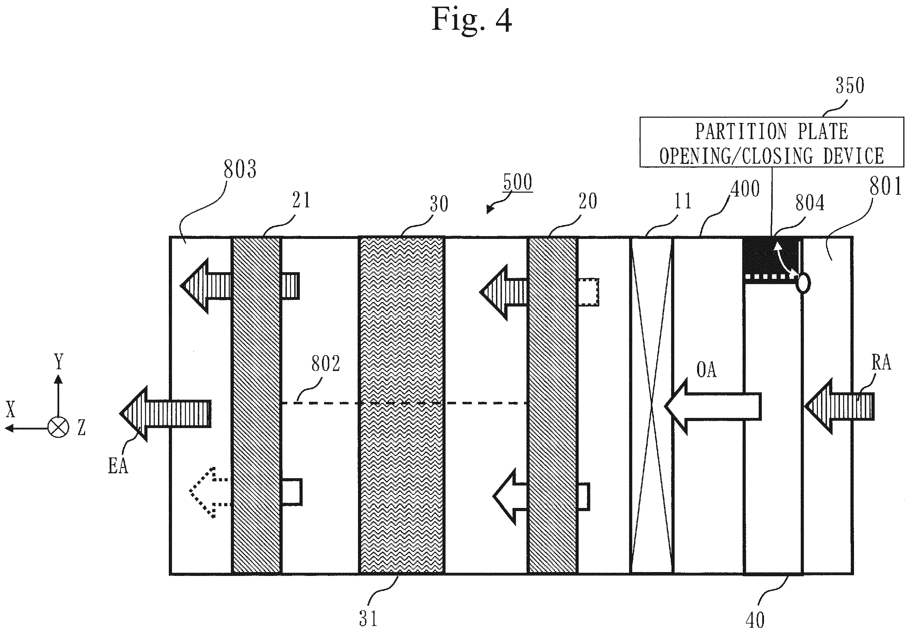

Fig. 4 schematically illustrates the air treatment apparatus 500 seen through a bottom surface.

A configuration of the air treatment apparatus 500 will be described with referring to Figs. 1, 2, 3, and 4.

The air treatment apparatus 500 is provided with: (1) the total heat exchanger 40; (2) a heater 10; (3) a cooler 11; (4) an upstream damper 20; (5) the first stationary desiccant 30; (6) the second stationary desiccant 31; (7) a downstream damper 21; (8) an outdoor air detection sensor 80; (9) a return air detection sensor 81; and (10) a preset information storage unit 82. As illustrated in Fig. 2, elements (1) the total heat exchanger 40 to (9) the return air detection sensor 81 are arranged in a housing 400.
(1) The total heat exchanger 40 exchanges total heat between outdoor air and return air.
(2) The heater 10 heats return air to make it into high-temperature, low-humidity air that regenerates the desiccant.
(3) The cooler 11 cools the outdoor air to make it into low-temperature, high-humidity air to be dehumidified (adsorbed) by the desiccant.
(4) The upstream damper 20 switches the desiccant into which the return air flows and the desiccant into which the outdoor air flows.
(5) The first stationary desiccant 30 dehumidifies the outdoor air as the outdoor air passes through it.
(6) The second stationary desiccant 31 dehumidifies the outdoor air as the outdoor air passes through it.
(7) The downstream damper 21 is switched in accordance with switching of the upstream damper 20 and allows the return air or the outdoor air to pass.
(8) The outdoor air detection sensor 80 detects temperature and humidity of the outdoor air.
(9) The return air detection sensor 81 detects temperature and humidity of the return air.
(10) The preset information storage unit 82 stores preset temperature and preset humidity which are preset information.

The heater 10 and the cooler 11 constitute a heat supply device 12. The heater 10 is a first heat exchanger. The cooler 11 is a second heat exchanger. The first stationary desiccant 30 is a first stationary dehumidification device.

The second stationary desiccant 31 is a second dehumidification device. The first stationary desiccant 30 and the second stationary desiccant 31 constitute a complex dehumidification device 32.

The upstream damper 20 is a damper 920. The upstream damper 20 allows the return air to flow into one of the first stationary dehumidification device and the second stationary dehumidification device, and allows the outdoor air to flow into the other one of the first stationary dehumidification device and the second stationary dehumidification device. The upstream damper 20 also switches between a return air path 810 and an outdoor air path 811 so that the return air and the outdoor air pass through different ones of the first stationary dehumidification device and the second stationary dehumidification device.

As illustrated in Fig. 1, the total heat exchanger 40, the heat supply device 12, the upstream damper 20 being the damper 920, and the complex dehumidification device 32 are arranged sequentially from the total heat exchanger 40 followed by the heat supply device 12, the upstream damper 20 being the damper 920, and then the complex dehumidification device 32. As illustrated in Figs. 1 and 2, the total heat exchanger 40, the heater 10 being the first heat exchanger, the upstream damper 20 being the damper 920, and the complex dehumidification device 32 are arranged in the return air path 810 sequentially starting with the total heat exchanger 40, from upstream to downstream of the return air path 810 where the return air flows. Likewise, the total heat exchanger 40, the cooler 11 being the second heat exchanger, the upstream damper 20 being the damper 920, and the complex dehumidification device 32 are arranged in the outdoor air path 811 sequentially starting with the total heat exchanger 40, from upstream to downstream of the outdoor air path 811 where the outdoor air flows.

### < Partition Plate >

As illustrated in Fig. 1, a first partition plate 801 vertically divides an interior of the housing 400, extending from a return-air/outdoor-air inlet port to the upstream damper 20. The heater 10 is located above the first partition plate 801. The cooler 11 is located under the first partition plate 801. The first partition plate 801 forms a quadrangle indicated by A, B, C, and D.

A second partition plate 802 horizontally divides an interior of the housing 400, extending from the upstream damper 20 to the downstream damper 21. The first stationary desiccant 30 is located on the left side of the second partition plate 802. The second stationary desiccant 31 is located on the right side of the second partition plate 802. The second partition plate 802 forms a quadrangle indicated by E, F, G, and H.

A third partition plate 803 vertically divides an interior of the housing 400, extending from the downstream damper 21 to a return-air (exhaust-air)/outdoor-air (supply-air) outlet port. The supply air flows out from above the third partition plate 803. The exhaust air flows out from under the third partition plate 803. The third partition plate 803 forms a quadrangle indicated by I, J, K, and L.

The air treatment apparatus 500 is further provided with an upstream damper opening/closing device 320, a downstream damper opening/closing device 321, and a partition plate opening/closing device 350. The upstream damper opening/closing device 320 and the downstream damper opening/closing device 321 are opening/closing mechanisms that open individual sub-dampers of the upstream damper 20 and individual sub-dampers of the downstream damper 21, respectively.

The upstream damper opening/closing device 320 opens/closes sub-dampers 20a, 20b, 20c, and 20d included in the upstream damper 20. The downstream damper opening/closing device 321 opens/closes sub-dampers 21a, 21b, 21c, and 21d included in the downstream damper 21. The partition plate opening/closing device 350 is an opening/closing mechanism that opens and closes a bypass channel partition plate 804. The bypass channel partition plate 804 opens to form a return air bypass channel 50 (to be described later).

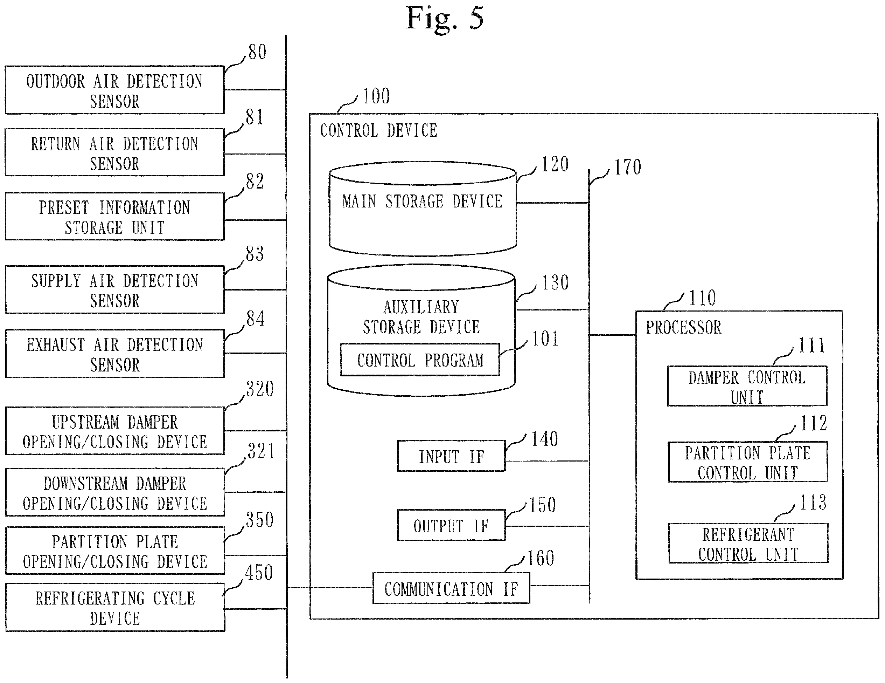

The air treatment apparatus 500 is further provided with a control device 100 which controls the upstream damper opening/closing device 320, the downstream damper opening/closing device 321, and the partition plate opening/closing device 350. The control device 100 is connected to the outdoor air detection sensor 80, the return air detection sensor 81, the preset information storage unit 82, a supply air detection sensor 83, an exhaust air detection sensor 84, the upstream damper opening/closing device 320, the downstream damper opening/closing device 321, the partition plate opening/closing device 350, and a refrigerating cycle device 450, as will be described later with referring to Fig. 5.

### ^{∗∗∗} Description of Configurations ^{∗∗∗}

Fig. 5 illustrates a hardware configuration of the control device 100. The control device 100 is a computer. The control device 100 is a bypass control device, a refrigerant control device, and a damper control device. The control device 100 is provided with a processor 110, and also with other hardware devices such as a main storage device 120, an auxiliary storage device 130, an input interface 140, an output interface 150, and a communication interface 160. An interface will be expressed as IF below. The processor 110 is connected to the other hardware devices via a signal line 170 and controls the other hardware devices.

The control device 100 is provided with a damper control unit 111, a partition plate control unit 112, and a refrigerant control unit 113, as function elements. Functions of the damper control unit 111, partition plate control unit 112, and refrigerant control unit 113 are implemented by a control program 101. The control program 101 is stored in the auxiliary storage device 130.

The processor 110 is a device that runs the control program 101. The control program 101 is a program that implements the functions of the damper control unit 111, partition plate control unit 112, and refrigerant control unit 113. The processor 110 is an Integrated Circuit (IC) which performs computation processing. Specific examples of the processor 110 include a Central Processing Unit (CPU), a Digital Signal Processor (DSP), and a Graphics Processing Unit (GPU).

The main storage device 120 is a storage device that stores data. Specific examples of the main storage device 120 include a Static Random-Access Memory (SRAM) and a Dynamic Random-Access Memory (DRAM). The main storage device 120 keeps a computation result of the processor 110.

The auxiliary storage device 130 is a storage device that keeps data in a nonvolatile manner. Specific examples of the auxiliary storage device 130 include a Hard Disk Drive (HDD). The auxiliary storage device 130 may be a portable recording medium such as an SD (registered trademark; Secure Digital) memory card, a NAND flash, a flexible disk, an optical disk, a compact disk, a Blu-ray (registered trademark) Disc, and a Digital Versatile Disk (DVD).

The input IF 140 is a port to which various types of apparatuses are connected and to which data of the various types of apparatuses are inputted.

The output IF 150 is a port to which various types of apparatuses are connected and through which control signals are outputted to the various types of apparatuses by the processor 110.

The communication IF 160 is a communication port via which the various types of apparatuses communicate with the processor 110. In Fig. 5, the communication IF 160 is connected to the outdoor air detection sensor 80, the return air detection sensor 81, the preset information storage unit 82, the supply air detection sensor 83, the exhaust air detection sensor 84, the upstream damper opening/closing device 320, the downstream damper opening/closing device 321, the partition plate opening/closing device 350, and the refrigerating cycle device 450.

The processor 110 loads the control program 101 to the main storage device 120 from the auxiliary storage device 130. The processor 110 reads the control program 101 from the main storage device 120 and runs the control program 101. Not only the control program 101 but also an Operating System (OS) is stored in the main storage device 120. The processor 110 runs the control program 101 while running the OS.

The control device 100 may be provided with a plurality of processors that substitute for the processor 110. The plurality of processors share run of the control program 101. Each processor is a device that runs the control program 101, just as the processor 110 does.

Data, information, signal values, and variable values which are utilized, processed, or outputted by the control program 101 are stored in the main storage device 120, the auxiliary storage device 130, or a register or cache memory in the processor 110. The control program 101 is a program that causes the computer to execute each process, each procedure, or each stage corresponding to the damper control unit 111, the partition plate control unit 112, or the refrigerant control unit 113 with its "unit" being replaced by "process", "procedure", or "stage".

The control method is a method carried out as the control device 100 being the computer runs the control program 101. The control program 101 may be presented as a computer-readable recording medium in which it is stored, or may be presented as a program product.

Operations of the control device 100 correspond to the control method. The operations of the control device 100 correspond to processing of the control program.

The upstream damper 20 switches between the return air path 810 and the outdoor air path 811 so that the return air and the outdoor air pass through different ones of the first stationary desiccant 30 and the second stationary desiccant 31. Figs. 1, 2, 3, and 4 illustrate a state where the return air path 810 leads to the first stationary desiccant 30 and the outdoor air path 811 leads to the second stationary desiccant 31.

As illustrated in Fig. 1, the heater 10 is installed above the cooler 11. Specifically, the heater 10 is arranged above the cooler 11 in a direction of gravity.

Inversely, the cooler 11 may be arranged above the heater 10 in the direction of gravity. The outdoor air passes through the cooler 11. Thus, if the cooler 11 is arranged above the heater 10, the return air path 810 illustrated in Fig. 2 serves as the outdoor air path 811, and the outdoor air path 811 illustrated in Fig. 2 serves as the return air path 810.

### < Return Air Path 810 >

The return air path 810 will now be described. Figs. 1 and 2 illustrate the following.
(1) The return air flows into the total heat exchanger 40 from under the total heat exchanger 40, flows out of the total heat exchanger 40, and flows above the first partition plate 801.
(2) The return air flows into the heater 10 and then flows into the upstream damper 20.
(3) In the upstream damper 20, as illustrated in Fig. 1, of the four sub-dampers 20a, 20b, 20c, and 20d, the sub-dampers 20a and 20c are located above the first partition plate 801. Of the sub-dampers 20a and 20c, the sub-damper 20c is open. Thus, the return air passes through the sub-damper 20c so as to be directed toward the first stationary desiccant 30, and flows into the first stationary desiccant 30. If the sub-damper 20c is closed and the sub-damper 20a is open, the return air passes through the sub-damper 20a so as to be directed toward the second stationary desiccant 31, and flows into the second stationary desiccant 31. In this manner, the return air passing through the heater 10 flows into one or the other one of the first stationary desiccant 30 and the second stationary desiccant 31 in accordance with the open/closed state of the sub-dampers 20a and 20c of the upstream damper 20.
(4) In the downstream damper 21, of the sub-dampers 21c and 21d on the left side, the sub-damper 21d is open. Therefore, the return air flowing into the first stationary desiccant 30 passes through the sub-damper 21d and flows out as exhaust air. This is how the return air flows through the return air path 810.

### < Outdoor Air Path 811 >

The outdoor air path 811 will now be described. Figs. 1 and 2 illustrate the following.
(1) The outdoor air flows into the total heat exchanger 40 from above the total heat exchanger 40, flows out of the total heat exchanger 40, and flows under the first partition plate 801.
(2) The outdoor air flows into the cooler 11 and then flows into the upstream damper 20.
(3) In the upstream damper 20, as illustrated in Fig. 1, of the four sub-dampers 20a, 20b, 20c, and 20d, the sub-dampers 20b and 20d are located under the first partition plate 801. Of the sub-dampers 20b and 20d, the sub-damper 20b is open. Thus, the outdoor air passes through the sub-damper 20b so as to be directed toward the second stationary desiccant 31, and flows into the second stationary desiccant 31. If the sub-damper 20b is closed and the sub-damper 20d is open, the outdoor air passes through the sub-damper 20d so as to be directed toward the first stationary desiccant 30, and flows into the first stationary desiccant 30. In this manner, the outdoor air flowing into the cooler 11 communicates to one or the other one of the first stationary desiccant 30 and the second stationary desiccant 31 in accordance with the open/closed state of the sub-dampers 20b and 20d of the upstream damper 20. Note that the return air and the outdoor air do not flow into the same stationary desiccant simultaneously.
(4) In the downstream damper 21, of the sub-dampers 21a and 21b on the right side, the sub-damper 21a is open. Therefore, the outdoor air passing through the second stationary desiccant 31 passes through the sub-damper 21a and flows out as supply air. This is how the outdoor air flows through the return air path 810.

As illustrated in Fig. 1, when the sub-dampers 20b and 20c are open in the upstream damper 20, the sub-dampers 21a and 21d are open in the downstream damper 21.

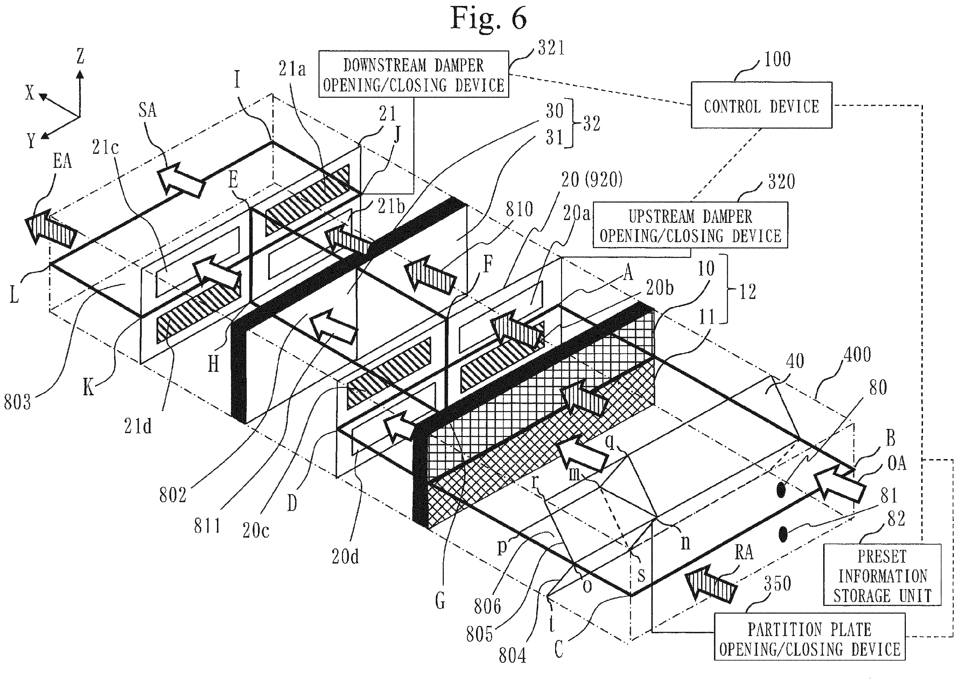

Fig. 6 illustrates a state where a plurality of sub dampers are open in opposite directions to those in Fig. 1. As illustrated in Fig. 6, when the sub-dampers 20a and 20d are open in the upstream damper 20, the sub-dampers 21b and 21c are open in the downstream damper 21.

In Fig. 1, a side through which the return air and the outdoor air flow in will be called front, and a side through which the return air and the outdoor air flow out will be called rear.

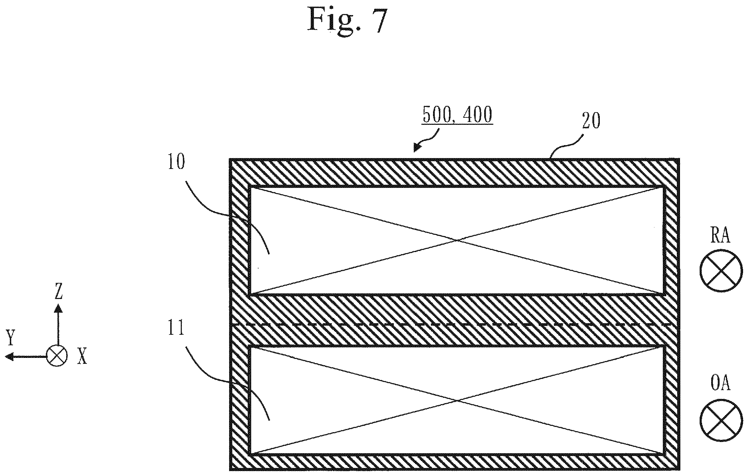

Fig. 7 is a schematic front view of the air treatment apparatus 500.

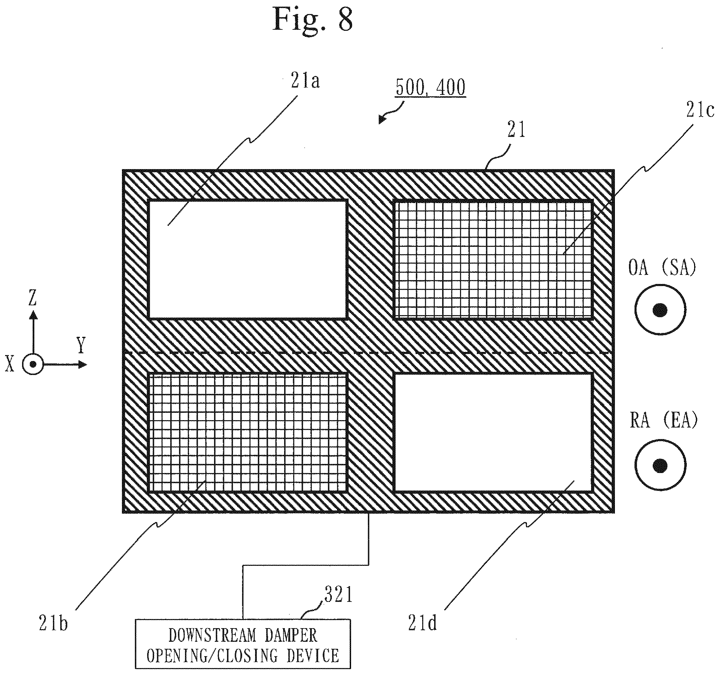

Fig. 8 is a schematic rear view of the air treatment apparatus 500. Fig. 7 illustrates a state where the heater 10 into which the return air flows is arranged on the cooler 11 into which the outdoor air flows. In Fig. 8, in the downstream damper 21, the sub-dampers 21a and 21d are open and the sub-dampers 21b and 21c are closed.

As illustrated in Fig. 1, each of the upstream damper 20 and the downstream damper 21 is formed of a set of four sub-dampers. That is, the upstream damper 20 is provided with the sub-dampers 20a, 20b, 20c, and 20d, and the downstream damper 21 is provided with the sub-dampers 21a, 21b, 21c, and 21d.

The heater 10 may be a water/air heat exchanger through which hot water flows, or may be a direct-expansion refrigerant/air heat exchanger through which a high-temperature refrigerant flows. The cooler 11 may be a water/air heat exchanger through which cold water flows, or may be a direct-expansion refrigerant/air heat exchanger through which a low-temperature refrigerant flows.

### ^{∗∗∗} Description of Operations ^{∗∗∗}

### < Heat Exchange Mode >

A heat exchange mode will be described below. The heat exchange mode signifies that the return air and the outdoor air perform total heat exchange in the total heat exchanger 40.
(1) As illustrated in Figs. 1 and 2, outdoor air and return air which has a lower temperature and a lower humidity than the outdoor air flow into the total heat exchanger 40. In the total heat exchanger 40, the outdoor air and the return air exchange heat.
(2) At this time, the bypass channel partition plate 804 which forms the bypass channel 50 is closed, and the return air does not bypass the total heat exchanger 40. That is, if the bypass channel partition plate 804 is closed, the return air flows into the total heat exchanger 40 and then into the heater 10 from the total heat exchanger 40. The return air flowing into the heater 10 has a high temperature and a low relative humidity.
(3) As described above, opening/closing of the four sub-dampers 20a, 20b, 20c, and 20d of the upstream damper 20 is controllable, and opening/closing of the four sub-dampers 21a, 21b, 21c, and 21d of the downstream damper 21 is also controllable.
(4) As described above, the open/closed states of the sub-dampers 21a, 21b, 21c, and 21d of the downstream damper 21 are opposite to those of the sub-dampers 20a, 20b, 20c, and 20d of the upstream damper 20. The sub-dampers 20a, 20b, 20c, and 20d are connected to the upstream damper opening/closing device 320. The sub-dampers 21a, 21b, 21c, and 21d are connected to the downstream damper opening/closing device 321. The upstream damper opening/closing device 320 opens/closes the sub-dampers 20a, 20b, 20c, and 20d. The downstream damper opening/closing device 321 opens/closes the sub-dampers 21a, 21b, 21c, and 21d. The damper control unit 111 of the control device 100 controls the upstream damper opening/closing device 320 so as to control opening/closing of the sub-dampers 20a, 20b, 20c, and 20d, and controls the downstream damper opening/closing device 321 so as to control opening/closing of the sub-dampers 21a, 21b, 21c, and 21d.
(5) In the case of Fig. 1, in the upstream damper 20, the sub-dampers 20b and 20c are open, and the sub-dampers 20a and 20d are closed.
(6) In the downstream damper 21, the sub-dampers 21a and 21d are open, and the sub-dampers 21b and 21c are closed.

The return air passes through the upstream damper 20 and then flows into one or the other one of the first stationary desiccant 30 and the second stationary desiccant 31. Referring to Fig. 1, adsorbed water evaporates from the first stationary desiccant 30 into which the return air flows, so the first stationary desiccant 30 dries off. The return air flowing into the first stationary desiccant 30 is temperature-decreased, so its relative humidity increases. The return air flowing into the first stationary desiccant 30 passes through the downstream damper 21 and is exhausted. As illustrated in Fig. 1, if the sub-damper 21d is open, the return air is exhausted from the sub-damper 21d as exhaust air.

In Fig. 1, the outdoor air flows into the total heat exchanger 40 and then into the cooler 11, so its temperature decreases and its relative humidity increases.

The outdoor air passes through the upstream damper 20 and then flows into the first stationary desiccant 30 or the second stationary desiccant 31 in accordance with the open/closed state of the sub-dampers 20b and 20d.

In Fig. 1, since the sub-damper 20b is open, the outdoor air flows into the second stationary desiccant 31. In the second stationary desiccant 31 into which the outdoor air flows, the second stationary desiccant 31 adsorbs water in the outdoor air to dehumidify the outdoor air. The outdoor air flowing into and passing through the second stationary desiccant 31 is temperature-increased, and its relative humidity is decreased. The outdoor air passing through the second stationary desiccant 31 passes through the downstream damper 21 and is exhausted. In Fig. 1, since the sub-damper 21a is open, the outdoor air is supplied though the sub-damper 21a as supply air.

In the upstream damper 20, if the sub-dampers 20a and 20d are in the closed state, the sub-dampers 20b and 20c are in the open state. At this time, in the downstream damper 21, the sub-dampers 21a and 20d are in the open state and the sub-dampers 21b and 21c are in the closed state. This state of the upstream damper 20 and downstream damper 21 will be called state 1. If the sub-dampers 20a and 20d are in the open state, the sub-dampers 20b and 20c are in the closed state. At this time, in the downstream damper 21, the sub-dampers 21a and 20d are in the closed state and the sub-dampers 21b and 21c are in the open state. This state of the upstream damper 20 and downstream damper 21 will be called state 2 (Fig. 6).

That is, the state 1 is a state where the return air flows into the first stationary desiccant 30 and the outdoor air flows into the second stationary desiccant 31 (Fig. 1). The state 2 is a state where the return air flows into the second stationary desiccant 31 and the outdoor air flows into the first stationary desiccant 30 (Fig. 6). These state 1 and state 2 may switch at a lapse of a predetermined period of time. After the predetermined period of time lapses, the damper control unit 111 of the control device 100 switches between the state 1 and the state 2 via the upstream damper opening/closing device 320 and the downstream damper opening/closing device 321.

Alternatively, in accordance with supply-air temperature and humidity detected by the supply air detection sensor 83 (Fig. 5) or exhaust-air temperature and humidity detected by the exhaust air detection sensor 84 (Fig. 5), the damper control unit 111 may switch between the state 1 and the state 2 via the upstream damper opening/closing device 320 and the downstream damper opening/closing device 321.

When the damper control unit 111 switches between the state 1 and the state 2, a desiccant to adsorb water (a desiccant through which the outdoor air passes) and a desiccant to be regenerated (a desiccant through which the heated return air passes) switch. Hence, the air treatment apparatus 500 can perform dehumidifying operation continuously.

### < Bypass Mode >

A bypass mode will be described with referring to Figs. 1, 3, 4, 9, and 10.

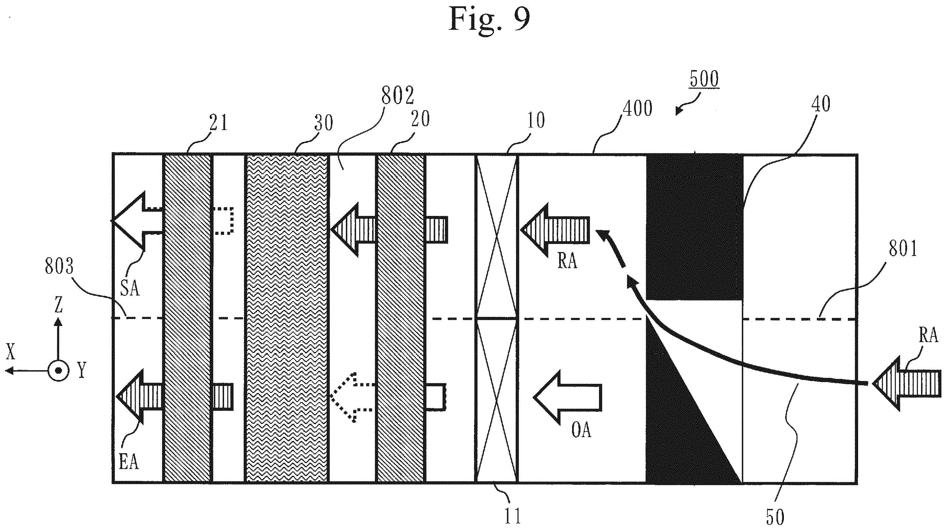

Fig. 9 is a schematic side view of the air treatment apparatus 500 in which the bypass channel 50 is formed.

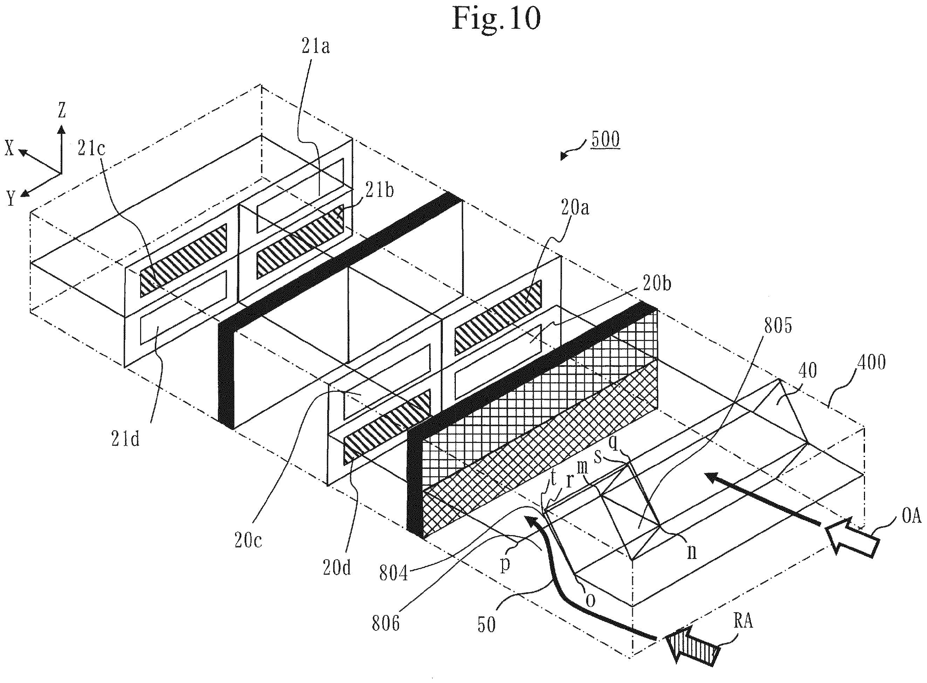

Fig. 10 is a schematic perspective view of the air treatment apparatus 500 in which the bypass channel 50 is formed.

The bypass mode is a mode in which the return air does not flow into the total heat exchanger 40 but flows into the heater 10, so that the return air does not perform total heat exchange with the outdoor air in the total heat exchanger 40.

The air treatment apparatus 500 has the bypass channel 50 through which the return air bypasses the total heat exchanger 40 so as to be directed toward the heater 10. The bypass channel 50 is controlled to switch between an ON state where the return air is bypassed and an OFF state where the return air is not bypassed. A state where the bypass channel partition plate 804 is open corresponds to the ON state of the bypass channel 50. A state where the bypass channel partition plate 804 is closed corresponds to the OFF state of the bypass channel 50.

When the partition plate opening/closing device 350 opens/closes the bypass channel partition plate 804, the return air bypass channel 50 is turned on/off. When the partition plate control unit 112 of the control device 100 controls the partition plate opening/closing device 350, the bypass channel partition plate 804 is opened/closed, as will be described later.

The control device 100 is a bypass control device. The partition plate control unit 112 of the control device 100 switches the bypass channel 50 between one and the other one of the ON state and the OFF state on the basis of temperature and humidity of the outdoor air and temperature and humidity of the return air.

The bypass channel partition plate 804, the plate 805, and the opening 806 will be described below which are indicated by solid lines in Fig. 1. As illustrated in Fig. 1, an opening 806 indicated by a quadruple of m, n, o, and p is formed in part of the first partition plate 801. Also, a plate 805 indicated by n, o, r, and q is arranged in a Y-axis direction of the total heat exchanger 40. The plate 805 is fixed at a position in the Y-axis direction of the total heat exchanger 40 and does not rotate. The plate 805 prevents the outdoor air from flowing into a side where the heater 10 is arranged, instead of passing through the total heat exchanger 40.

The bypass channel partition plate 804 indicated by n, o, t, and s is arranged under the first partition plate 801. The bypass channel partition plate 804 in Fig. 1 is in the closed state. When the bypass channel partition plate 804 is in the closed state, that is, in a state where the bypass channel 50 is not formed, the bypass channel partition plate 804 is arranged to be symmetrical with the plate 805 with respect to the first partition plate 801. This prevents the return air from flowing into the side where the cooler 11 is arranged, instead of passing through the total heat exchanger 40.

Fig. 10 shows a state where the bypass channel partition plate 804 is open to form the bypass channel 50. The bypass channel partition plate 804 is rotated by the partition plate opening/closing device 350 about an n-o rotation axis. By this rotation, t and s of the bypass channel partition plate 804 come close to r and q, respectively, of the plate 805 to finally overlap with r and q, respectively. In a state where the bypass channel partition plate 804 is open, the return air flowing in from under the total heat exchanger 40 does not flow into the total heat exchanger 40 but passes through the opening 806 (m, n, o, and p) appearing due to the open state of the bypass channel partition plate 804, and flows into the heater 10. This return air path is the bypass channel 50.

Whether or not to bypass the return air is judged by the partition plate control unit 112 as follows. The partition plate control unit 112 judges whether or not to bypass the return air in accordance with the values detected by the outdoor air detection sensor 80 and return air detection sensor 81 and the value being set by the preset information storage unit 82.

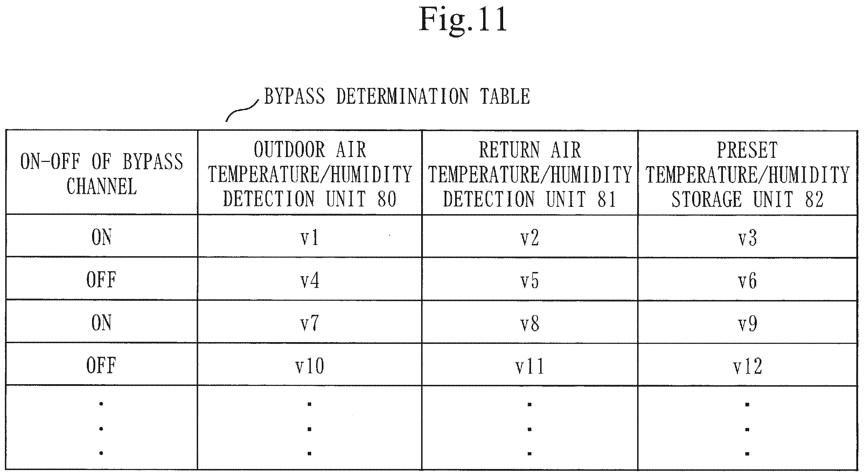

Fig. 11 presents a bypass determination table illustrating bypass determination information held by the partition plate control unit 112. The bypass determination table is stored in the auxiliary storage device 130. Note that v1 to v12 indicated in the bypass determination table express a range of values. The partition plate control unit 112 acquires values from the outdoor air detection sensor 80, return air detection sensor 81, and preset information storage unit 82. If the acquired values correspond to v1, v2, and v3 in the first row of the bypass determination table and to v7, v8, and v9 in the third row of the bypass determination table, the partition plate control unit 112 bypasses the return air. In this case, the partition plate control unit 112 controls the partition plate opening/closing device 350 so as to set the bypass channel partition plate 804 in the open state.

In the bypass mode, as illustrated in Figs. 1 and 9, outdoor air and return air which has a lower temperature and a lower humidity than the outdoor air do not perform total heat exchange in the total heat exchanger 40. Hence, the return air and the outdoor air flow into the heater 10 and the cooler 11, respectively, without exchanging temperature and the humidity. Operations after this are the same as those in the heat exchange mode.

Switching between the bypass mode and the heat exchange mode is decided in accordance with whether or not energy necessary for the heater 10 and energy necessary for the cooler 11 become the minimum.

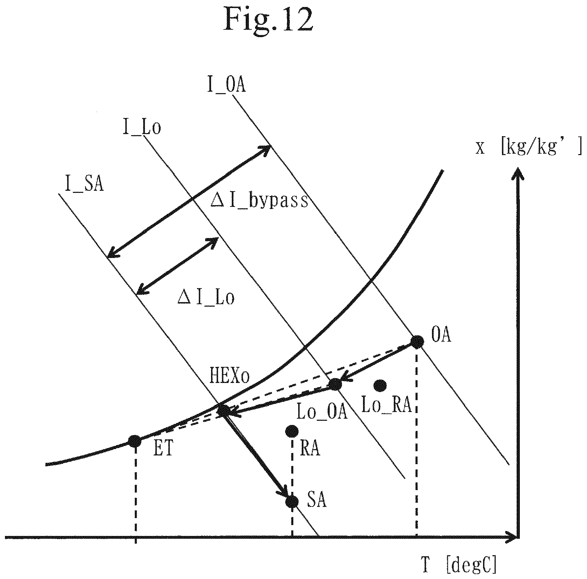

Fig. 12 illustrates behavior of the outdoor air on an air diagram. Fig. 12 employs symbols as follows.
Lo_OA: outdoor air at the outlet of the total heat exchanger 40
Lo_RA: return air at the outlet of the total heat exchanger 40
HEXo: air at the outlet of the cooler 11
ET: evaporating temperature of the refrigerant
I: air enthalpy
ΔI_Lo: enthalpy change which is necessary in the cooler 11 when the outdoor air passes through the total heat exchanger 40
ΔI_bypass: enthalpy change which is necessary in the cooler 11 when the outdoor air bypasses the total heat exchanger 40

As illustrated in Fig. 12, by allowing the outdoor air to pass through the total heat exchanger 40, the specific enthalpy change ΔI_bypass which is necessary in the cooler 11 decreases to ΔI_Lo. Namely, a cooling capacity necessary in the cooler 11 decreases.

Meanwhile, the return air passing through the total heat exchanger 40 becomes indoor air (air (Lo_RA) having a higher temperature and higher humidity than the return air and flows into the heater 10. In the heater 10, in order to regenerate the stationary desiccant, the heating capacity is controlled such that the humidity of the inflow air becomes lower than a predetermined relative humidity. Hence, the higher the humidity of air, the larger the heating capacity which is necessary in the heater 10. Therefore, by allowing the return air to flow into the total heat exchanger 40, the heating capacity which is necessary in the heater 10 increases.

The necessary heating capacity and the necessary cooling capacity, that is, the necessary energy changes in accordance with the condition of the outdoor air and in accordance with whether or not to allow the return air to flow into the total heat exchanger 40. Therefore, there is a situation where the necessary energy of the bypass mode is smaller than in the heat exchange mode. In the air treatment apparatus 500, as mentioned above, when the values acquired from the outdoor air detection sensor 80, return air detection sensor 81, and preset information storage unit 82 satisfy the condition for the bypass channel ON indicated on the bypass determination table, the partition plate control unit 112 sets the bypass channel partition plate 804 in the open state to form the bypass channel 50.

### ^{∗∗∗} Effect of Embodiment 1 ^{∗∗∗}

The air treatment apparatus 500 according to Embodiment 1 switches between the bypass mode and the heat exchange mode in accordance with the condition of the outdoor air while satisfying a necessary dehumidification quantity. Therefore, an air treatment apparatus having a high energy efficiency with a minimum necessary energy can be provided.

Also, if the cooler 11 is arranged under the heater 10, condensed water generated in the cooler 11 does not reach the heater 10. Then, the condensed water can be collected easily.

### < Modification 1 >

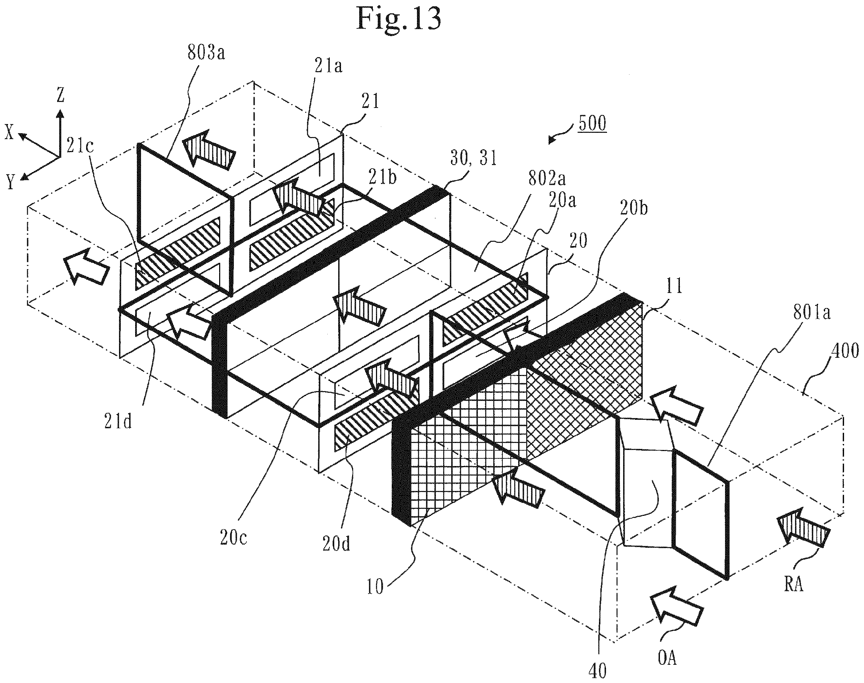

Fig. 13 illustrates a configuration of an air treatment apparatus 500 in which a heater 10 and a cooler 11 are arranged on the left and right. As illustrated in Fig. 13, the heater 10 and the cooler 11 may be arranged on the left and right. The configuration of the air treatment apparatus 500 of Fig. 13 might correspond to the air treatment apparatus 500 of Fig. 1 being rotated through 90 degrees about the X-axis.

In Fig. 13, in an area extending from a return-air/outdoor-air inlet port to an upstream damper 20, a first partition plate 801a that horizontally divides the interior of a housing 400 is arranged. Also, in an area extending from the upstream damper 20 to a downstream damper 21, a second partition plate 802 that vertically divides the interior of the housing 400 is arranged. In an area extending from the downstream damper 21 to a return-air/outdoor-air outlet port, a third partition plate 803a that horizontally divides the interior of the housing 400 is arranged. In Fig. 13, a bypass channel partition plate 804, an upstream damper opening/closing device 320, a downstream damper opening/closing device 321, a partition plate opening/closing device 350, and so on are not illustrated.

Although not illustrated, the outdoor air and the return air may flow from opposite directions into the total heat exchanger 40 .

### < Modification 2 >

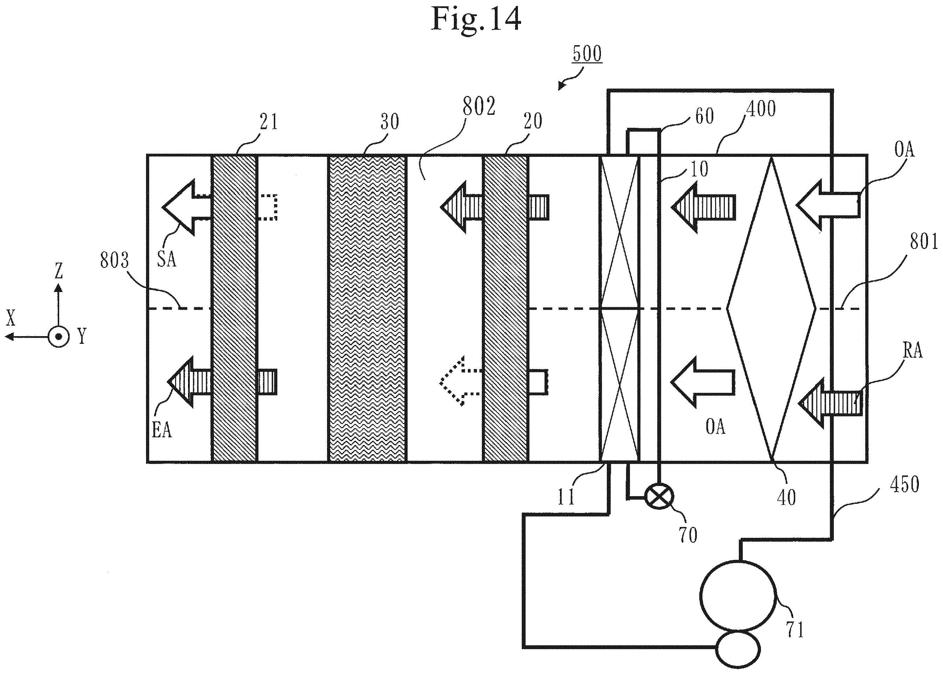

Fig. 14 illustrates a configuration of Modification 2. An air treatment apparatus 500 may be further provided with a refrigerating cycle device which has a compressor, a condenser being a first heat exchanger, an expansion valve, and an evaporator being a second heat exchanger, and through which a refrigerant circulates. Specifically, as illustrated in Fig. 14, the air treatment apparatus 500 is provided with a refrigerating cycle device 450 in which a compressor 71, the first heat exchanger, an expansion valve 70, and the second heat exchanger are connected with each other via a pipe to circulate the refrigerant. The air treatment apparatus 500 uses the first heat exchanger as the heater 10, and uses the second heat exchanger as the cooler 11.

A control device 100 is a refrigerant control device. A refrigerant control unit 113 of the control device 100 controls flow rate and temperature of the refrigerant flowing into the first heat exchanger being the condenser, and into the evaporator being the second heat exchanger. The refrigerant control unit 113 of the control device 100 controls a heating capacity of the condenser being the heater 10 and a cooling capacity of the evaporator being the cooler 11, by adjusting a rotation speed of the compressor 71 and an aperture of the expansion valve 70. The heating capacity and the cooling capacity are decided by the refrigerant control unit 113 illustrated in Fig. 5 with referring to values detected by an outdoor air detection sensor 80, return air detection sensor 81, and preset information storage unit 82, or with referring to values being set in the preset information storage unit 82.

When the refrigerating cycle device 450 is provided, heating and cooling can be performed by a single refrigerating circuit, so that the air treatment apparatus 500 can be made compact. Also, since exhaust heat that occurs when generating cold heat is utilized by the heater 10, energy efficiency can be enhanced.

Although not illustrated, an outdoor unit provided with a heat exchanger and a blower fan may be installed between the heater 10 and the compressor 71, so that the heating capacity can be adjusted.

### < Modification 3 >

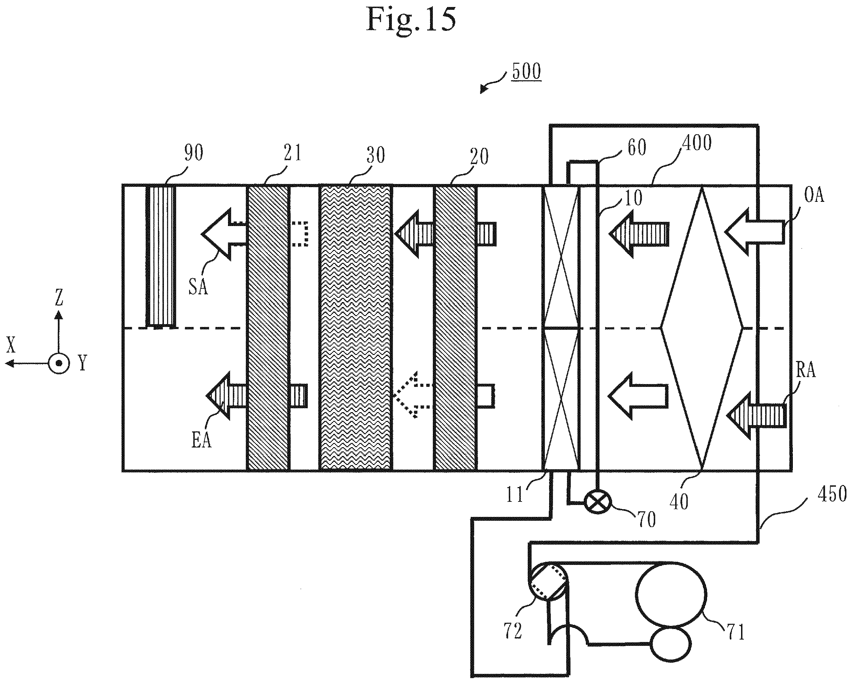

Fig. 15 illustrates Modification 3. In Modification 3, a refrigerating cycle device 450 is provided with a four-way valve which causes a condenser being a first heat exchanger to function as an evaporator and which causes an evaporator being a second heat exchanger to function as a condenser. An air treatment apparatus 500 is also provided with a humidification device 90 arranged downstream of a complex dehumidification device 32 in an outdoor air path 811. When the condenser functions as the evaporator, an outdoor air passes through the humidification device 90 so that the humidification device 90 humidifies the passing outdoor air. As illustrated in Fig. 15, a four-way valve 72 is added to the refrigerating cycle device 450 of Modification 2. Furthermore, the humidification device 90 which humidifies the outdoor air is installed downstream of a downstream damper 21.

Dehumidification operations are the same as in Modification 2. By switching the four-way valve 72, the second heat exchanger is used as the condenser (heater). Hence, the outdoor air is heated by the second heat exchanger and is then allowed to flow into the humidification device 90, so that the outdoor air is humidified. No desiccant need be utilized for humidification. When a desiccant is utilized, humidification is performed by water being emitted from the desiccant because of the outdoor air, which is contrary to the case of dehumidification, and then humidification is further performed by the humidification device 90.

As humidification and dehumidification can be achieved by the same air treatment apparatus 500, the air treatment apparatus 500 can be utilized throughout the year. providing an advantage.

### < Supplement to Hardware Configuration >

A hardware configuration of the control device 100 will be supplemented below. In the control device 100 of Fig. 5, the functions of the control device 100 are implemented by software. However, the functions of the control device 100 may be implemented by hardware.

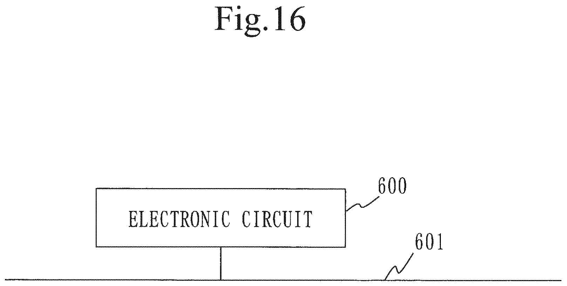

Fig. 16 illustrates a hardware configuration of a modification of the control device 100. An electronic circuit 600 of Fig. 16 is a dedicated electronic circuit that implements functions of the damper control unit 111, partition plate control unit 112, refrigerant control unit 113, main storage device 120, auxiliary storage device 130, input IF 140, output IF 150, and communication IF 160. The electronic circuit 600 is connected to a signal line 601. The electronic circuit 600 is specifically a single circuit, a composite circuit, a programmed processor, a parallel-programmed processor, a logic IC, a GA, an ASIC, or an FPGA. Note that GA stands for Gate Array, ASIC stands for Application Specific Integrated Circuit, and FPGA stands for Field-Programmable Gate Array. The functions of the constituent elements of the control device 100 may be implemented by one electronic circuit, or by a plurality of electronic circuit through distribution. According to another modification, the functions of some of the constituent elements of the control device 100 may be implemented by an electronic circuit, and the remaining functions may be implemented by software.

The processor 110 and the electronic circuit 600 are each called processing circuitry. In the control device 100, the functions of the damper control unit 111, partition plate control unit 112, and refrigerant control unit 113 may be implemented by processing circuitry. Alternatively, the functions of the damper control unit 111, partition plate control unit 112, refrigerant control unit 113, main storage device 120, auxiliary storage device 130, input IF 140, output IF 150, and communication IF 160 may be implemented by processing circuitry.

Embodiment 1 involving a plurality of modifications has been described above. Of Embodiment 1 involving the plurality of modifications, one portion may be practiced partly. Alternatively, of Embodiment 1 involving the plurality of modifications, two or more portions may be partly combined and practiced. The present invention is not limited to Embodiment 1, and various changes may be made to the present invention as necessary.

### Reference Signs List

10: heater; 11: cooler; 12: heat supply device; 20: upstream damper; 20a, 20b, 20c, 20d: sub-damper; 21: downstream damper; 21a, 21b, 21c, 21d: sub-damper; 30: first stationary desiccant; 31: second stationary desiccant; 32: complex dehumidification device; 40: total heat exchanger; 50: bypass channel; 60: refrigerant pipe; 70: expansion valve; 71: compressor; 72: four-way valve; 80: outdoor air detection sensor; 81: return air detection sensor; 82: preset information storage unit; 83: supply air detection sensor; 84: exhaust air detection sensor; 90: humidification device; 100: control device; 101: control program; 110: processor; 111: damper control unit; 112: partition plate control unit; 113: refrigerant control unit; 120: main storage device; 130: auxiliary storage device; 140: input IF; 150: output IF; 160: communication IF; 170: signal line; 320: upstream damper opening/closing device; 321: downstream damper opening/closing device; 350: partition plate opening/closing device; 400: housing; 450: refrigerating cycle device; 500: air treatment apparatus; 600: electronic circuit; 601: signal line; 801: first partition plate; 802: second partition plate; 803: third partition plate; 804: bypass channel partition plate; 805: plate; 806: opening; 801a: first partition plate; 802a: second partition plate; 803a: third partition plate; 810: return air path; 811: outdoor air path; 920: damper.

## Claims

1. An air treatment apparatus comprising:
a total heat exchanger,
a heat supply device including a first heat exchanger and a second heat exchanger,
a damper, and
a complex dehumidification device including a first stationary dehumidification device and a second stationary dehumidification device;
the total heat exchanger, the heat supply device, the damper and the complex dehumidification device being arranged sequentially from the total heat exchanger followed by the heat supply device, the damper and then the complex dehumidification device;
the total heat exchanger, the first heat exchanger, the damper and the complex dehumidification device being arranged in a return air path sequentially starting with the total heat exchanger, from upstream to downstream of the return air path where return air flows;
the total heat exchanger, the second heat exchanger, the damper and the complex dehumidification device being arranged in an outdoor air path sequentially starting with the total heat exchanger, from upstream to downstream of the outdoor air path where outdoor air flows; and
the damper:
allowing the return air to flow into one of the first stationary dehumidification device and the second stationary dehumidification device, and allowing the outdoor air to flow into the other one of the first stationary dehumidification device and the second stationary dehumidification device; and
switching between the return air path and the outdoor air path so that the return air and the outdoor air pass through different ones of the first stationary dehumidification device and the second stationary dehumidification device.

2. The air treatment apparatus according to claim 1,
wherein the first heat exchanger is a heater that heats the return air, and wherein the second heat exchanger is a cooler that cools the outdoor air.

3. The air treatment apparatus according to claim 2, comprising
a bypass channel through which the return air bypasses the total heat exchanger so as to be directed toward the heater.

4. The air treatment apparatus according to claim 3,
wherein the bypass channel is controlled to switch between an ON state where the return air is bypassed and an OFF state where the return air is not bypassed,
the air treatment apparatus further comprising
a bypass control device to switch the bypass channel between one and the other one of the ON state and the OFF state on the basis of temperature and humidity of the outdoor air and temperature and humidity of the return air.

5. The air treatment apparatus according to any one of claims 2 to 4,
wherein the heater is arranged above the cooler in a direction of gravity.

6. [Claim 6] The air treatment apparatus according to any one of claims 1 to 5, further comprising
a refrigerating cycle device which has a compressor, a condenser, an expansion valve, and an evaporator, and through which a refrigerant circulates,
wherein the condenser is used as the first heat exchanger and the evaporator is used as the second heat exchanger.

7. The air treatment apparatus according to claim 6, further comprising
a refrigerant control device which controls flow rate and temperature of the refrigerant flowing into the condenser and the evaporator.

8. The air treatment apparatus according to claim 7,
wherein the refrigerating cycle device further includes a four-way valve which causes the condenser to function as the evaporator and which causes the evaporator to function as the condenser,
the air treatment apparatus further comprising
a humidification device arranged downstream of the complex dehumidification device in the outdoor air path, wherein when the condenser functions as the evaporator, the outdoor air passes through the humidification device so that the humidification device humidifies the passing outdoor air.
